# EUROPEAN PATENT APPLICATION

(11) **EP 3 950 633 A1**
(43) Date of publication of application: **09.02.2022**
(21) Application number: 20783876.4
(22) Date of filing: 26.03.2020
(51) Int. Cl.: C04B 2/10, C10B 39/02

(54) **METHOD AND APPARATUS FOR PRODUCING QUICK LIME USING COKE DRY QUENCHING FACILITY**

(30) Priority: 29.03.2019 JP 2019067806
(71) Applicant: JFE Steel Corporation, Tokyo 100-0011 (JP)
(72) Inventor: KAMURA, Ryo, Tokyo 100-0011 (JP); OKAMOTO, Hirotaka, Tokyo 100-0011 (JP); MATSUMURA, Kenji, Tokyo 100-0011 (JP); KUSUMOTO, Hisao, Tokyo 100-0011 (JP); IWATA, Koji, Tokyo 100-0011 (JP); SUGANO, Takahiro, Tokyo 100-0011 (JP)
(74) Representative: Grünecker Patent- und Rechtsanwälte PartG mbB
(86) International application number: PCT/JP2020/013614
(87) International publication number: WO 2020/203629

(57) **Abstract**

Provided is a method and apparatus for producing quick lime using a coke dry quenching facility, wherein the method and apparatus can produce quick lime with a good heat efficiency by using a simple configuration. Heated circulating gas that has been heated by cooling red hot coke in a coke dry quenching facility is fed to a lime firing furnace, and pyrolysis of limestone by the fed heated circulating gas in the lime firing furnace is carried out to produce quicklime; and concurrently, cooled circulating gas that has been cooled by pyrolysis of limestone and heat exchange with limestone in the lime firing furnace is fed to the coke dry quenching facility to use as cooled circulating gas for cooling red hot coke.

## Description

### Technical Field

The present invention relates to a method for producing quicklime, and particularly, relates to a method and an apparatus for producing quick lime involving utilization of discharged gas from a coke dry quenching facility.

### Background Art

As a method for producing quicklime, so far there have been general methods in which pyrolysis of limestone (CaCO₃) (CaCO₃ --> CaO + CO₂) is carried out using a vertical furnace such as a Maerz kiln or a Beckenbach kiln, or a rotary kiln to produce quick lime (CaO) (see Non Patent Literature 1). In these methods, thermal energy, specifically, a theoretical quantity of heat of 766 kcal/kg-CaO is needed for pyrolysis. Accordingly, in conventional methods for producing quicklime, heavy oil, coal, LNG, coke, etc. as fuel are fed from the outside for thermal energy needed for each furnace as shown in Table 1. Thus, in the conventional methods for producing quick lime described above, it is necessary for producing quick lime to supply thermal energy from the outside for pyrolysis of limestone, and disadvantageously, the thermal efficiency is not high.

**[Table 1]**

| | Rotary kiln | Vertical furnace (Maerz kiln) | Vertical furnace (Beckenbach kiln) |
|---|---|---|---|
| Unit consumption [kcal/kg-CaO] | 1100 to 1150 | 890 | 920 to 950 |
| Type of fuel | Heavy oil, coal, LNG | Heavy oil | Heavy oil, coke |

On the other hand, a coke dry quenching facility (CDQ) is generally used, which cools red hot coke from a coke oven to recover thermal energy from sensible heat of red hot coke. As a method for producing quick lime while taking the thermal efficiency into consideration, there is a known method for producing quick lime in which limestone is put in a prechamber of a coke dry quenching facility together with red hot coke to be cooled to produce quick lime by utilizing the sensible heat of the coke (see Patent Literature 1).

### Citation List

### Patent Literature

Patent Literature 1: Japanese Patent Laid-Open No. 2004-262724

### Non Patent Literature

Non Patent Literature 1: Handbook of Gypsum and Coal (1972, edited by the Society of Gypsum and Lime), p.478-505

### Summary of Invention

### Technical Problem

However, a problem of the method in which limestone is put in a prechamber together with red hot coke as described in Patent Literature 1 is that the amount of the available sensible heat of the coke is small. Specifically, the decomposition reaction of limestone to quick lime (CaCO₃ --> CaO + CO₂) is caused at 800°C or more, and therefore, only sensible heat of the coke at 800°C or more can be utilized. Furthermore, since limestone is mixed with red hot coke to carry out the pyrolysis of limestone, separation of quick lime from coke is difficult. In addition, quick lime absorbs moisture in gas for cooling coke and moisture in air after discharged from the CDQ to thereby generate heat, which results in the problem of insufficient cooling of the coke. Furthermore, putting limestone in a cooling tower of a coke dry quenching facility has a disadvantageous influence on the amount of coke that can be cooled.

An object of the present invention is to provide a method for producing quick lime using a coke dry quenching facility, the method efficiently utilizing sensible heat of red hot coke by using a simple configuration with a good heat efficiency, and a production apparatus therefor.

### Solution to Problem

The inventors have diligently studied to solve the above-described problems with the conventional techniques and to achieve the object described above, and as a result, have reached development of a novel method for producing quick lime using a coke dry quenching facility as described below.

Specifically, the present invention is a method for producing quick lime using a coke dry quenching facility, characterized in that the method includes:
feeding heated circulating gas that has been heated by cooling red hot coke in the coke dry quenching facility to a lime firing furnace, and carrying out pyrolysis of limestone by the fed heated circulating gas in the lime firing furnace to produce quicklime; and concurrently,
feeding to the coke dry quenching facility cooled circulating gas that has been cooled by pyrolysis of limestone and heat exchange with limestone in the lime firing furnace to use as cooled circulating gas for cooling red hot coke.

In the method for producing quick lime using a coke dry quenching facility according to the present invention, which is configured as described above, it is considered that the followings bring about more preferable solutions:
(1) the heated circulating gas after cooling red hot coke is heated with a heating burner;
(2) the heated circulating gas after cooling red hot coke is heated with the heating burner depending on a ratio between an O₂ concentration, a CO concentration, a CO₂ concentration, and an H₂ concentration of discharged gas provided in the lime firing furnace;
(3) the heated circulating gas after cooling red hot coke is heated with the heating burner depending on a temperature of discharged gas provided in the lime firing furnace;
(4) the heated circulating gas after cooling red hot coke is passed through a dust filter; and
(5) the lime firing furnace is a vertical furnace or a rotary kiln.

Also, the present invention is an apparatus for producing quick lime using a coke dry quenching facility, characterized in that the apparatus includes: the coke dry quenching facility that discharges heated circulating gas that has been heated by cooling red hot coke, and a lime firing furnace that carries out pyrolysis of limestone by the discharged heated circulating gas to produce quick lime and discharges cooled circulating gas that has been cooled by pyrolysis of limestone and heat exchange with limestone, wherein the cooled circulating gas discharged from the lime firing furnace is used again as cooled circulating gas for cooling red hot coke in the coke dry quenching facility.

In the apparatus for producing quick lime using a coke dry quenching facility according to the present invention, which is configured as described above, it is considered that the followings bring about more preferable solutions:
(1) the gas discharged from the coke dry quenching facility is heated with a heating burner and fed to the lime firing furnace;
(2) the heated circulating gas after cooling red hot coke is passed through a dust filter; and
(3) the lime firing furnace is a vertical furnace or a rotary kiln.

### Advantageous Effects of Invention

The method and the apparatus of the present invention for producing quick lime using a coke dry quenching facility, in which sensible heat of circulating gas in the coke dry quenching facility is used to produce quick lime from limestone, can utilize more sensible heat than the case of putting limestone in a prechamber as described in Patent Literature 1. In the case of putting limestone in a prechamber, the available sensible heat of coke is 800°C to 1000°C, whereas 200°C to 800°C of sensible heat is additionally available in the case of utilizing the sensible heat of circulating gas. In addition, since cooling of coke and production of quick lime are independently performed, it is not necessary to separate quick lime from coke, which is advantageous. Furthermore, circulating gas after production of quick lime can be used again as circulating gas for cooling in a coke dry quenching facility to thereby utilize the sensible heat of red hot coke effectively.

### Brief Description of Drawings

[Figure 1] Figure 1 is an illustration showing an exemplary configuration of the production apparatus for carrying out the method of the present invention for producing quick lime using a coke dry quenching facility.
[Figure 2] Figure 2 is an illustration showing another exemplary configuration of the production apparatus for carrying out the method of the present invention for producing quick lime using a coke dry quenching facility.

### Description of Embodiments

The method and the apparatus of the present invention for producing quick lime using a coke dry quenching facility will be now described.

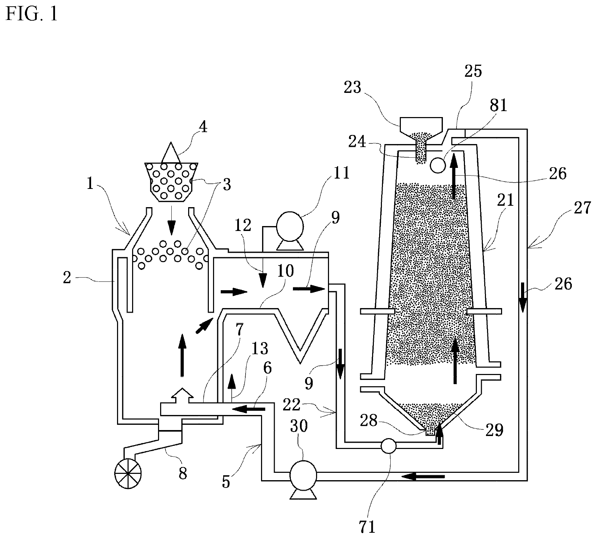

Figure 1 is an illustration showing an exemplary configuration of the production apparatus for carrying out the method of the present invention for producing quick lime using a coke dry quenching facility. In the example shown in Figure 1, the apparatus for producing quick lime of the present invention is composed of a coke dry quenching facility 1 and a vertical furnace 21 as a lime firing furnace.

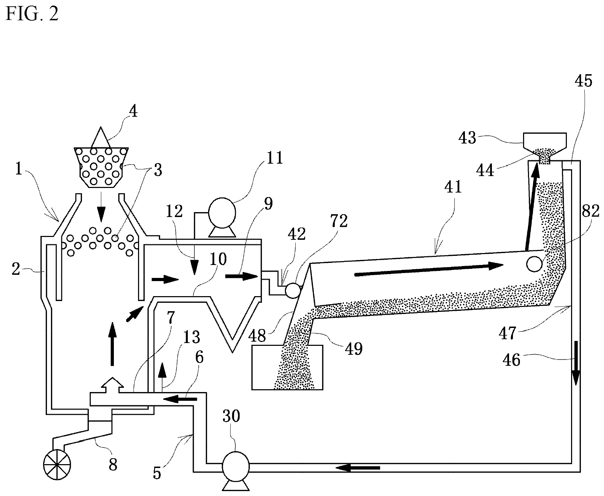

In the coke dry quenching facility 1 shown in Figure 1, 2 is a cooling tower; 3 is red hot coke that is transferred from a coke oven not shown; 4 is a coke bucket that transfers the red hot coke 3 to the top of the cooling tower 2 and feed it into the cooling tower 2; 5 is a first circulating gas-feeding pipe that feeds cooled circulating gas 6 to cool the red hot coke 3 from the bottom of the cooling tower 2; 7 is a circulating gas-feeding piping that feeds cooled circulating gas 6 into the cooling tower 2 from the circulating gas-feeding pipe 5; 8 is a coke-discharging port for taking out cooled coke from the cooling tower 2, the coke-discharging port being provided in the bottom of the cooling tower 2; 9 is heated circulating gas obtained by heating the cooled circulating gas 6 by the sensible heat of the red hot coke 3 located in the upper part of the cooling tower 2; 10 is a circulating gas-discharging port that discharges the heated circulating gas 9 from the cooling tower 2 to the outside; 11 is a blower that feeds air 12 into the circulating gas-discharging port 10; and 13 is an circulating gas-discharging outlet that is provided in the first circulating gas-feeding pipe and discharges the circulating gas to the outside, if necessary.

In the vertical furnace 21 shown in Figure 1, 22 is a second circulating gas-feeding pipe that feeds heated circulating gas 9 from the circulating gas-discharging port 10 of the coke dry quenching facility 1 to the bottom of the vertical furnace 21; 23 is a lime-feeding port that feeds limestone 24 (CaCO₃) into the furnace from the top of the vertical furnace 21; 25 is a circulating gas-discharging port that discharges from the furnace the cooled circulating gas 26 after pyrolysis of the limestone 24 by the heated circulating gas 9; 27 is the third, circulating gas-feeding pipe that feeds the cooled circulating gas 26 from the circulating gas-discharging port 25 to the outside; and 28 is a quicklime-discharging port for taking out quick lime 29 (CaO) produced by pyrolysis of the limestone 24 to the outside, the quicklime-discharging port being provided in the bottom of the vertical furnace 21. In the second circulating gas-feeding pipe 22, a heating burner 71 that heats the circulating gas is provided. The vertical furnace 21 is lined with refractory, and the furnace itself is made of steel and can be upsized. Examples of the vertical furnace include a Beckenbach kiln and a Mertz kiln.

In the example illustrated in Figure 1, a thermometer and a concentration meter for the discharged gas, 81 (capable of measurement for O₂, CO, CO₂, and H₂) are provided in the upper part of the vertical furnace. The combustion level of the heating burner is controlled according to the temperature and the concentration of the discharged gas to thereby improve the temperature control by the heating burner.

Specifically, the CO₂ concentration is measured at the upper part of the lime firing furnace (the space above the limestone-packed bed), and from the flow rate of the gas at that location (for example, the flow rate of the gas in the standard conditions per hour, Nm³/h) and the CO₂ concentration, the CO₂ flow rate (Nm³/h) can be calculated. CO₂ is generated when quick lime is produced from limestone, and therefore, the amount of quick lime produced per unit time correlates to the amount of CO₂ discharged from the lime firing furnace. If the amount of quick lime produced can be estimated, the decomposition rate of the limestone can be estimated. Accordingly, if the decomposition rate is lower than the targeted value, the combustion level of the heating burner can be controlled so as to be increased to raise the temperature of the gas introduced into the lime firing furnace. The waste heat obtained from the coke dry quenching facility is utilized in the present invention, and thus the quantity of heat obtained may vary depending on the operation of the coke dry quenching facility. For this reason, the combustion of the heating burner is preferably controlled depending on the CO₂ flow rate in the upper part of the lime firing furnace.

Similarly, the combustion of the heating burner can be controlled depending on the temperature of the upper part of the lime firing furnace. This is based on the fact that the temperature of the upper part of the lime firing furnace correlates with the decomposition rate of the limestone. For example, if the temperature of the upper part of the lime firing furnace is lower than the targeted value, the combustion level of the heating burner can be controlled so as to be increased.

Furthermore, in the example shown in Figure 1, a blower 30 that feeds the circulating gas is provided between the first circulating gas-feeding pipe 5 and the third, circulating gas-feeding pipe 27. The cooled circulating gas 6, the heated circulating gas 9, and the cooled circulating gas 26 circulate between the coke dry quenching facility 1 and the vertical furnace 21 by the function of the blower 30. The heated circulating gas 9 after cooling the red hot coke 3 is preferably passed through a dust filter to separate and remove coke in the heated circulating gas 9. The dust filter is preferably provided between the position at which the circulating gas is discharged from the CDQ and the circulating gas inlet of the vertical furnace, in view of preventing contamination of the vertical furnace with coke. The dust filter is also preferably provided between the position at which the circulating gas is discharged from the vertical furnace and the inlet of the CDQ, in view of preventing contamination of the CDQ with quicklime.

Figure 2 is an illustration showing another exemplary configuration of the production apparatus for carrying out the method of the present invention for producing quick lime using a coke dry quenching facility. In the example shown in Figure 2, the apparatus for producing quick lime of the present invention is composed of a coke dry quenching facility 1 and a rotary kiln 41 as a lime firing furnace.

The configuration of the coke dry quenching facility 1 shown in Figure 2 is the same as that illustrated in Figure 1 described above. Thus, the same numerical reference signs as in the example shown in Figure 1 are used, and the descriptions therefor is omitted here. Also, with regard to other structural members, the same numerical reference signs as in the example shown in Figure 1 are used for the same members as the members described for Figure 2, and the descriptions therefor is omitted here.

In the rotary kiln 41 shown in Figure 2, 42 is the second circulating gas-feeding pipe that feeds heated circulating gas 9 from a circulating gas-discharging port 10 of the coke dry quenching facility 1 to the bottom of the rotary kiln 41; 43 is a lime-feeding port that feeds limestone 44 (CaCO₃) into the kiln from the inlet of the rotary kiln 41; 45 is a circulating gas-discharging port that discharges from the kiln the cooled circulating gas 46 after pyrolysis of the limestone 44 by the heated circulating gas 9; 47 is a third circulating gas-feeding pipe that feeds the cooled circulating gas 46 from the circulating gas-discharging port 45 to the outside; and 48 is a quicklime-discharging port for taking out quick lime 49 (CaO) produced by pyrolysis of the limestone 44 to the outside, the quicklime-discharging port being provided in the bottom of the rotary kiln 41. In the second circulating gas-feeding pipe 42, a heating burner 72 that heats the circulating gas is provided. The rotary kiln 41 has a cylindrical steel shell and is lined with refractory, and the rotary kiln 41 rotates about the axis at a constant speed during operation to perform firing.

In the example illustrated in Figure 2, a thermometer and a concentration meter, 82 (capable of measurement for O₂, CO, CO₂, and H₂) are provided in the rotary kiln 41. The combustion level of the heating burner is controlled according to the temperature and the concentration of the discharged gas to thereby improve the temperature control by the heating burner. The location of the thermometer and that of the concentration meter for the discharged gas provided is preferably in the space close to the limestone-feeding port in the rotary kiln 41, and for example, they are preferably provided at a location 50 cm or less apart from an end of the rotating body of the rotary kiln 41, the end being close to the limestone-feeding port. The thermometer and the concentration meter may also be provided in the circulating gas-discharging port 45 of the rotary kiln 41. The method for controlling with the concentration meter for the discharged gas and the thermometer is the same as in the example shown in Figure 1.

Furthermore, in the example shown in Figure 2, a blower 30 that feeds the circulating gas is provided between the first circulating gas-feeding pipe 5 and the third circulating gas-feeding pipe 47. The cooled circulating gas 6, the heated circulating gas 9, and the cooled circulating gas 46 circulate between the coke dry quenching facility 1 and the rotary kiln 41 by the function of the blower 30.

In the examples shown in Figures 1 and 2, the red hot coke 3 at about 1000°C that has undergone carbonation in a coke oven is put in a prechamber in the upper part of the cooling tower 2 of the coke dry quenching facility. The red hot coke 3 put in the cooling tower 2 is cooled to about 200°C by the cooled circulating gas 6. In contrast, the temperature of the cooled circulating gas 6 rises to about 800 to 900°C by the sensible heat of the red hot coke 3, whereby the cooled circulating gas 6 becomes the heated circulating gas 9. Furthermore, air can be blown by the blower 11 to burn the combustible gas components in the heated circulating gas 9, whereby the temperature is further increased. The sensible heat of the heated circulating gas 9 from the cooling tower 2 pyrolyzes limestone in the lime firing furnace, specifically, the vertical furnace 21 in Figure 1 and the rotary kiln 41 in Figure 2, and the sensible heat is thus utilized to produce quicklime. In this way, the sensible heat of the red hot coke 3 can be optimized for production of quicklime.

The examples shown in Figures 1 and 2, in which sensible heat of circulating gas in the coke dry quenching facility is used to produce quick lime from limestone, can utilize more sensible heat than the case of putting limestone in a prechamber as described in Patent Literature 1. In addition, since cooling of coke and production of quick lime are independently performed, it is not necessary to separate quick lime from coke, which is advantageous. Furthermore, circulating gas generated from production of quick lime can be used again as circulating gas for cooling in a coke dry quenching facility to thereby utilize the sensible heat of red hot coke effectively.

### Examples

The production apparatus having the configuration shown in Figure 1 was operated in accordance with the method of the present invention for producing quick lime using a coke dry quenching facility under the conditions of Inventive Example 1, Inventive Example 2, Inventive Example 3, Inventive Example 4, and Comparative Example 1 described below to thereby produce quicklime. The thermal energy balance when limestone is pyrolyzed to obtain quick lime is as follows.

A thought is given to a case where the sensible heat of circulating gas after cooling coke, 228 kcal/Nm³ (180°C to 850°C), is used for the heat needed for reaction of pyrolysis of CaCO₃ in limestone (CaCO₃ --> CaO + CO₂), 766 kcal/kg-CaO. The possible amount of quick lime to be produced per 1 Nm³ of circulating gas is a maximum of 228/766 = 0.297 kg-CaO/Nm³.

### <Inventive Example 1>

In accordance with the method of the present invention for producing quick lime using a coke dry quenching facility, quick lime was produced using a coke dry quenching facility having a capacity to treat coke of 68 t/hr and a flow rate of circulating gas of 84000 Nm³/hr using the production apparatus shown in Figure 1 without using a heating burner, and as a result, the amount of quick lime produced was 15 t/hr.

### <Inventive Example 2>

In accordance with the method of the present invention for producing quick lime using a coke dry quenching facility, quick lime was produced using a coke dry quenching facility having a capacity to treat coke of 86 t/hr and a flow rate of circulating gas of 106000 Nm³/hr using the apparatus shown in Figure 1 without using a heating burner and as a result, the amount of quick lime produced was 20 t/hr.

<Inventive Example 3>

In accordance with the method of the present invention for producing quick lime using a coke dry quenching facility, quick lime was produced using a coke dry quenching facility having a capacity to treat coke of 68 t/hr and a flow rate of circulating gas of 84000 Nm³/hr using the apparatus shown in Figure 2 without using a heating burner, and as a result, the amount of quick lime produced was 14 t/hr.

### <Inventive Example 4>

In accordance with the method of the present invention for producing quick lime using a coke dry quenching facility, quick lime was produced using a coke dry quenching facility having a capacity to treat coke of 68 t/hr and a flow rate of circulating gas of 84000 Nm³/hr using the apparatus shown in Figure 1 while rising the temperature of the gas introduced into the lime firing furnace to 900°C with a heating burner, and as a result, the amount of quick lime produced was 16 t/hr.

### <Comparative Example 1>

In accordance with Patent Literature 1, red hot coke and limestone were put together in a prechamber to produce coke and quicklime, and the amount of quick lime produced was 4.7 t/hr with 100 t-coke/hr.

It is seen from the above results that the amount of quick lime produced per 1 t of coke can be increased in all Inventive Examples compared to Comparative Example 1.

### Industrial Applicability

The method and the apparatus according to the present invention for producing quick lime using a coke dry quenching facility enable excellent operation in terms of thermal efficiency compared to conventional known production of quicklime, and are applicable in the form of a method and an apparatus for producing quick lime involving various apparatus layout.

### Reference Signs List

- 1: coke dry quenching facility
- 2: cooling tower
- 3: red hot coke
- 4: coke bucket
- 5: first circulating gas-feeding pipe
- 6, 26, 46: cooled circulating gas
- 7: circulating gas-feeding piping
- 8: coke-discharging port
- 9: heated circulating gas
- 10, 25, 45: circulating gas-discharging port
- 11, 30: blower
- 12: air
- 13: circulating gas-discharging outlet
- 21: vertical furnace
- 22, 42: second circulating gas-feeding pipe
- 23, 43: lime-feeding port
- 24, 44: limestone
- 27, 47: third circulating gas-feeding pipe
- 28, 48: quicklime-discharging port
- 29, 49: quicklime
- 41: rotary kiln
- 71, 72: heating burner
- 81, 82: thermometer and concentration meter for discharged gas

## Claims

1. A method for producing quick lime using a coke dry quenching facility, **characterized in that** the method includes:
feeding heated circulating gas that has been heated by cooling red hot coke in the coke dry quenching facility to a lime firing furnace, and carrying out pyrolysis of limestone by the fed heated circulating gas in the lime firing furnace to produce quicklime; and concurrently,
feeding to the coke dry quenching facility cooled circulating gas that has been cooled by pyrolysis of limestone and heat exchange with limestone in the lime firing furnace to use as cooled circulating gas for cooling red hot coke.

2. The method for producing quick lime using a coke dry quenching facility according to claim 1, wherein
the heated circulating gas after cooling red hot coke is heated with a heating burner.

3. The method for producing quick lime using a coke dry quenching facility according to claim 2, wherein
the heated circulating gas after cooling red hot coke is heated with the heating burner depending on a ratio between an O₂ concentration, a CO concentration, a CO₂ concentration, and an H₂ concentration of discharged gas provided in the lime firing furnace.

4. The method for producing quick lime using a coke dry quenching facility according to claim 2, wherein
the heated circulating gas after cooling red hot coke is heated with the heating burner depending on a temperature of discharged gas provided in the lime firing furnace.

5. The method for producing quick lime using a coke dry quenching facility according to any one of claims 1 to 4, wherein
the heated circulating gas after cooling red hot coke is passed through a dust filter.

6. The method for producing quick lime using a coke dry quenching facility according to any one of claims 1 to 5, wherein
the lime firing furnace is a vertical furnace or a rotary kiln.

7. An apparatus for producing quick lime using a coke dry quenching facility, **characterized in that** the apparatus includes:
a coke dry quenching facility that discharges heated circulating gas that has been heated by cooling red hot coke, and
a lime firing furnace that carries out pyrolysis of limestone by the discharged heated circulating gas to produce quick lime and discharges cooled circulating gas that has been cooled by pyrolysis of limestone and heat exchange with limestone,
wherein the cooled circulating gas discharged from the lime firing furnace is used again as cooled circulating gas for cooling red hot coke in the coke dry quenching facility.

8. The apparatus for producing quick lime using a coke dry quenching facility according to claim 7, wherein
the gas discharged from the coke dry quenching facility is heated with a heating burner and fed to the lime firing furnace.

9. The apparatus for producing quick lime using a coke dry quenching facility according to claim 7 or 8, wherein
the heated circulating gas after cooling red hot coke is passed through a dust filter.

10. The apparatus for producing quick lime using a coke dry quenching facility according to any one of claims 7 to 9, wherein
the lime firing furnace is a vertical furnace or a rotary kiln.
